# EUROPEAN PATENT SPECIFICATION

(11) **EP 4 412 875 B1**
(45) Date of publication and mention of the grant of the patent: **02.07.2025**
(21) Application number: 22758032.1
(22) Date of filing: 27.06.2022
(51) Int. Cl.: B60R 11/06, A47B 96/06

(54) **PLASTIC BRACKET FOR BINDING TOOLBOXES**
KUNSTSTOFFKLAMMER FÜR BINDEWERKZEUGKÄSTEN
SUPPORT EN PLASTIQUE POUR RELIER DES BOÎTES À OUTILS

(30) Priority: 07.10.2021 IT 202100004787 U
(43) Date of publication of application: 14.08.2024
(73) Proprietor: BAWER S.P.A., 75100 Matera (MT) (IT)
(72) Inventor: LORUSSO, Pasquale, 70022 ALTAMURA (IT); SARDONE, Agostino, 70022 ALTAMURA (IT)
(74) Representative: Russo, Dimitri
(86) International application number: PCT/IT2022/050182
(87) International publication number: WO 2023/058071

(56) References cited:
- EP-A1- 2 842 808
- CN-U- 201 501 351
- DE-A1- 102009 005 866
- US-A1- 2003 189 353

## Description

The invention object of the present utility model relates to a bracket, suitable for binding toolboxes to the frame of heavy vehicles, made of plastic material and suitable for replacing common steel brackets, employed in the same application.

As known, the toolboxes heavy vehicles are provided with are engaged to the vehicle chassis by employing metal brackets of various shape and size and with the aid of bolted connections. Commonly employed metal brackets have a set of drawbacks, first of all the weight, as the latter contributes to weigh on the suspended masses of the vehicle.

A further drawback of metal brackets employed for binding the toolboxes is represented by production cost and time, which are notoriously longer and more expensive than molding of a plastic member.

Metal brackets are made through processes including metal sheet cutting, long-term bending and drilling steps, apart from the fact that the working cycle of such metal brackets inevitably generates non-reusable processing scraps.

Metal brackets known for binding the toolboxes are naturally subjected to corrosion phenomena over time, therefore, in order to overcome such a drawback, they often need to be chemically treated or painted with special protective enamels beforehand. Document DE 10 2009 005866 A1 discloses a plastic bracket according to the preamble of claim 1.

An object of the present model is to provide a bracket for binding the toolboxes characterized in that it is very lightweight and at the same time it has the same structural features of common steel brackets. Said features being obtained through a structure comprising a set of stiffening elements, which make it suitable for withstanding loads insisting on both the vertical plane and the horizontal plane.

A further object of the invention is to provide a low-cost bracket for binding the toolboxes, said object being achieved thanks to the employed plastic injection production process, which entirely makes the finished product in a single step. These goals are achieved with a plastic bracket having the features of claim 1.

An advantage of the invention is to have made such plastic bracket with a geometry which makes it suitable for being mounted indifferently to the right or to the left of the box.

A further advantage of the invention is that such plastic bracket can fit the size of different boxes, because of the employment of compensation plugs which are centrally positioned and within the side of the bracket facing the box at the connection holes.

An advantageous aspect of the invention, from a simplicity and mounting speed point of view, is due to the fact that it is provided internally with compartments, in order to bind nuts and washers, and externally with hexagonal seats for engaging the heads of bolts passing through the brackets and binding the box.

These and further objects are achieved by the plastic bracket for binding toolboxes of the present utility model, described in a preferred non-limiting embodiment of further developments in the scope of the model, with the aid of the attached drawings which illustrate the following figures:

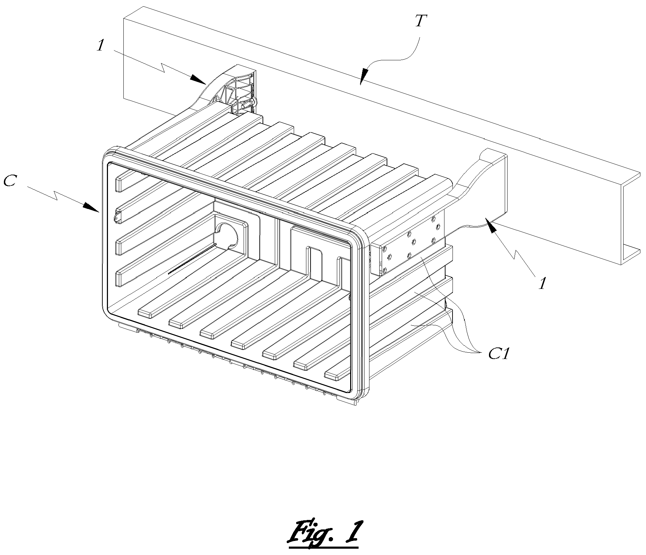

Fig. 1, an isometric view of a box bound to a frame portion by the plastic brackets object of the present model;

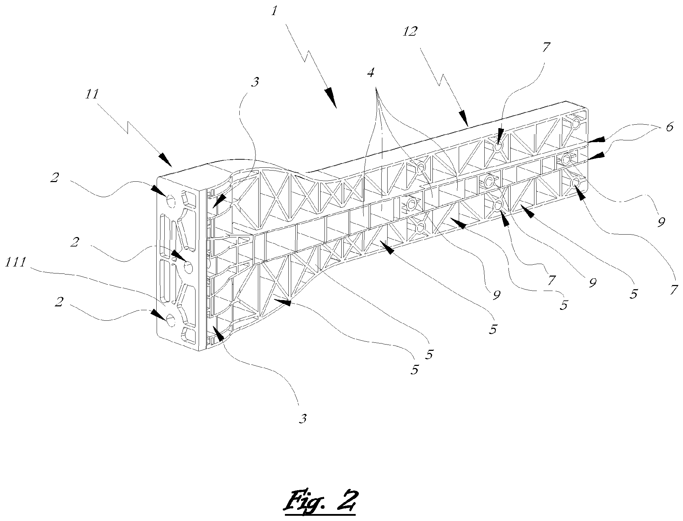

Fig. 2, a rear isometric view of the bracket;

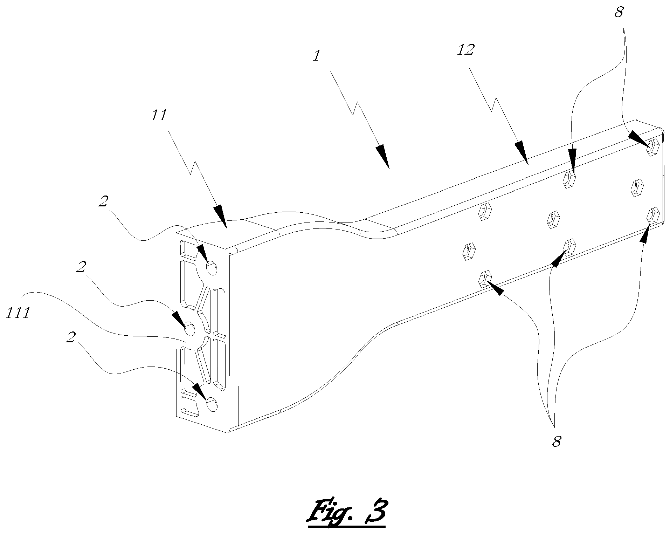

Fig. 3, a front isometric view of the bracket.

In the attached figures, the plastic bracket for binding toolboxes, hereinafter referred to as bracket 1 for the sake of simplicity, is depicted. Preferably, it is made of nylon reinforced with glass fibers. The bracket 1 of plane elongated prismatic shape geometrically consists of a first portion 11 which gradually tapers, coupling with a second portion 12 of smaller section and elongated shape with respect to the first one.

As illustrated in Figures two and three, the first portion 11 of the bracket 1 is provided at its end with a planar face 111, provided with through holes 2 for binding the bracket 1, by bolted connecting means, to the part of frame T on which it is desirable to bind a toolbox C.

Figure two illustrates that cavities 3 suitable for accommodating and binding nuts and washers are derived in the rear part of the planar face 111 and into the bracket 1, at the through holes 2.

The bracket 1 centrally consists, in its inner part facing the box C and along its entire length, of an ordered set of hollow sectors 4, while above and below the latter it consists of respective ordered sets of crosslinked sectors 5 which contribute to stiffen the structure of the bracket 1.

Crosslinked sectors 5 of the bracket 1, according to a preferred embodiment, are made with single and double diagonal ribs.

The bracket 1 is provided, in its inner part and centrally, with two protruding guides 6, adapted to engage one of the grooves C1 being on the side surfaces of toolboxes C. The bracket 1 is geometrically symmetrical with respect to the middle plane being parallel and central with respect to the protruding guides 6.

The bracket 1, still in its inner part, is provided with a set of cylindrical through seats 7, for allowing passing and accommodation of the fixing screws.

As illustrated in Figure three, in the outer part of the bracket 1 and at the cylindrical through seats 7, hexagonal blind seats 8 adapted to bind both the heads of the fixing screws and the closure plugs for holes not subjected to fixing are derived.

In order to make the bracket 1 fit different size of boxes C, compensation plugs 9 are provided within the protruding guides 6 and around the attachment holes.

## Claims

1. Plastic bracket for binding toolboxes (1), consisting of a first flat rectangular-section portion (11), which gradually tapers until coupling with a second portion (12), the latter being of smaller section and elongated shape, said bracket (1) **characterized in that** it centrally consists, in its inner part and along its entire length, of an ordered set of hollow sectors (4) and, above and below the latter, of respective ordered sets of crosslinked sectors (5).

2. Plastic bracket for binding toolboxes (1) of claim one, **characterized in that** the crosslinked sectors (5) are made with single and double diagonal ribs.

3. Plastic bracket for binding toolboxes (1) of the preceding claims, **characterized in that** it is provided, in its inner part and centrally, with two protruding guides (6).

4. Plastic bracket for binding toolboxes (1) of the preceding claims, **characterized in that** it is provided, in its inner part, with a set of cylindrical through seats (7) placed at hexagonal blind seats (8) derived in its outer part.

5. Plastic bracket for binding toolboxes (1) of the preceding claims, **characterized in that** compensation plugs (9) are positioned within the protruding guides (6).

6. Plastic bracket for binding toolboxes (1) of the preceding claims, **characterized in that** the first portion (11) is provided at its end with a planar face (111) provided with through holes (2).

7. Plastic bracket for binding toolboxes (1) of the preceding claims, **characterized in that** cavities (3) adapted to accommodate and bind nuts and washers are derived at the through holes (2) and within the planar face (111) of the first portion (11).

8. Plastic bracket for binding toolboxes (1) of the preceding claims, **characterized in that** it is made of nylon reinforced with glass fibers.

9. Plastic bracket for binding toolboxes (1) of the preceding claims, **characterized in that** it is symmetrical with respect to a plane being parallel and central with respect to the protruding guides (6).

## Patentansprüche

1. Kunststoffhalterung zum Befestigen von Werkzeugkästen (1), bestehend aus einem ersten flachen Abschnitt (11) mit rechteckigem Querschnitt, der sich allmählich verjüngt, bis er mit einem zweiten Abschnitt (12) gekoppelt wird, wobei letzterer einen kleineren Querschnitt und eine längliche Form aufweist, wobei die Halterung (1) **dadurch gekennzeichnet ist, dass** sie in ihrem inneren Teil und über ihre gesamte Länge mittig aus einer geordneten Reihe aus hohlen Bereichen (4) und oberhalb und unterhalb dieser aus jeweils geordneten Reihen aus vernetzten Bereichen (5) besteht.

2. Kunststoffhalterung zum Befestigen von Werkzeugkästen (1) nach Anspruch eins, **dadurch gekennzeichnet, dass** die vernetzten Bereiche (5) aus einzelnen und doppelten diagonalen Rippen bestehen.

3. Kunststoffhalterung zum Befestigen von Werkzeugkästen (1) nach den vorhergehenden Ansprüchen, **dadurch gekennzeichnet, dass** sie in ihrem inneren Teil und mittig mit zwei hervorstehenden Führungen (6) versehen ist.

4. Kunststoffhalterung zum Befestigen von Werkzeugkästen (1) nach den vorhergehenden Ansprüchen, **dadurch gekennzeichnet, dass** sie in ihrem inneren Teil mit einem Satz zylindrischer durchgehender Sitze (7) versehen ist, die in sechseckigen Blindsitzen (8) angeordnet sind, die sich in ihrem äußeren Teil befinden.

5. Kunststoffhalterung zum Befestigen von Werkzeugkästen (1) nach den vorhergehenden Ansprüchen, **dadurch gekennzeichnet, dass** Ausgleichsstopfen (9) innerhalb der hervorstehenden Führungen (6) angeordnet sind.

6. Kunststoffhalterung zum Befestigen von Werkzeugkästen (1) nach den vorhergehenden Ansprüchen, **dadurch gekennzeichnet, dass** der erste Abschnitt (11) an dessen Ende mit einer ebenen Fläche (111) versehen ist, die mit Durchgangslöchern (2) versehen ist.

7. Kunststoffhalterung zum Befestigen von Werkzeugkästen (1) nach den vorhergehenden Ansprüchen, **dadurch gekennzeichnet, dass** sich an den Durchgangslöchern (2) und innerhalb der ebenen Fläche (111) des ersten Abschnitts (11) Hohlräume (3) befinden, die zum Aufnehmen und Befestigen von Muttern und Unterlegscheiben geeignet sind.

8. Kunststoffhalterung zum Befestigen von Werkzeugkästen (1) nach den vorhergehenden Ansprüchen, **dadurch gekennzeichnet, dass** sie aus mit Glasfasern verstärktem Nylon besteht.

9. Kunststoffhalterung zum Befestigen von Werkzeugkästen (1) nach den vorhergehenden Ansprüchen, **dadurch gekennzeichnet, dass** sie symmetrisch in Bezug auf eine Ebene ist, die parallel und mittig in Bezug auf die hervorstehenden Führungen (6) verläuft.

## Revendications

1. Support en plastique pour lier des boîtes à outils (1), constitué d'une première portion plate de section rectangulaire (11), qui se rétrécit progressivement jusqu'à s'accoupler avec une deuxième portion (12), cette dernière étant de section plus petite et de forme allongée, ledit support (1) étant **caractérisé en ce qu'**il est constitué centralement, dans sa portion intérieure et sur toute sa longueur, d'un ensemble ordonné de secteurs creux (4) et, au-dessus et au-dessous de ce dernier, d'ensembles ordonnés respectifs de secteurs réticulés (5).

2. Support en plastique pour lier des boîtes à outils (1) selon la revendication 1, **caractérisé en ce que** les secteurs réticulés (5) sont réalisés avec des nervures diagonales simples et doubles.

3. Support en plastique pour lier les boîtes à outils (1) selon les revendications précédentes, **caractérisé en ce qu'**il est pourvu, dans sa portion intérieure et au centre, de deux guides saillants (6).

4. Support en plastique pour lier des boîtes à outils (1) selon les revendications précédentes, **caractérisé en ce qu'**il est pourvu, dans sa portion intérieure, d'un ensemble de sièges traversants cylindriques (7) placés au niveau de sièges borgnes hexagonaux (8) dérivés dans sa portion extérieure.

5. Support en plastique pour lier des boîtes à outils (1) selon les revendications précédentes, **caractérisé en ce que** des bouchons de compensation (9) sont positionnés à l'intérieur des guides saillants (6).

6. Support en plastique pour lier des boîtes à outils (1) selon les revendications précédentes, **caractérisé en ce que** la première portion (11) est pourvue à son extrémité d'une face plane (111) pourvue de trous traversants (2).

7. Support en plastique pour lier des boîtes à outils (1) selon les revendications précédentes, **caractérisé en ce que** des cavités (3) adaptées pour recevoir et lier des écrous et des rondelles sont dérivées au niveau des trous traversants (2) et à l'intérieur de la face plane (111) de la première portion (11).

8. Support en plastique pour lier les boîtes à outils (1) selon les revendications précédentes, **caractérisé en ce qu'**il est réalisé en nylon renforcé de fibres de verre.

9. Support en plastique pour lier les boîtes à outils (1) selon les revendications précédentes, **caractérisé en ce qu'**il est symétrique par rapport à un plan parallèle et central par rapport aux guides saillants (6).
